# EUROPÄISCHE PATENTSCHRIFT

(11) **EP 4 021 754 B1**
(45) Veröffentlichungstag und Bekanntmachung des Hinweises auf die Patenterteilung: **04.12.2024**
(21) Anmeldenummer: 20758159.6
(22) Anmeldetag: 17.08.2020
(51) Int. Cl.: B60L 9/04, B60L 13/00, B60L 50/53, B60L 5/36, B60L 5/04, B60M 1/12, B60M 1/23, B60M 7/00

(54) **OBERLEITUNGSSYSTEM FÜR BAUMASCHINEN FÜR DEN STÜCK- UND SCHÜTTGUTTRANSPORT SOWIE BAUMASCHINE**
VERHEAD CONTACT LINE SYSTEM FOR CONSTRUCTION MACHINES FOR TRANSPORT OF PIECE AND BULK GOODS AND CONSTRUCTION MACHINE
SYSTÈME DE LIGNE AÉRIENNE DE CONTACT POUR DES MACHINES DE CONSTRUCTION POUR LE TRANSPORT DES MARCHANDISES DE DÉTAIL ET DES PRODUITS EN VRAC ET MACHINE DE CONSTRUCTION

(30) Priorität: 02.10.2019 DE 102019126557
(43) Veröffentlichungstag der Anmeldung: 06.07.2022
(73) Patentinhaber: Liebherr-Mining Equipment Colmar SAS, 68025 Colmar cedex (FR)
(72) Erfinder: FORESTIER, Cédric, 6000 Colmar (FR); KUGELSTADT, Kai, 77933 Lahr (DE)
(74) Vertreter: Laufhütte, Dieter
(86) Internationale Anmeldenummer: PCT/EP2020/072966
(87) Internationale Veröffentlichungsnummer: WO 2021/063586

(56) Entgegenhaltungen:
- EP-A1- 1 086 845
- WO-A1-2010/094140
- WO-A1-2014/202103
- DE-A1- 102011 076 623
- DE-U1- 202017 006 645
- US-A1- 2014 195 091
- US-A1- 2016 046 206

## Beschreibung

Die Erfindung betrifft ein Oberleitungssystem zur elektrischen Versorgung des Fahrantriebes ein oder mehrerer Baumaschinen für den Stück- und Schüttguttransport, wobei die Oberleitung wenigstens ein parallel entlang der Fahrstrecke verlaufendes und gegenpolig stromführendes Leitungspaar umfasst, das durch entsprechende Stromabnehmer wenigstens einer Baumaschine elektrisch kontaktierbar ist.

Die Elektrifizierung bei Baumaschinen für die Stück- und Schüttgutbewegung wird zunehmend ein relevantes Thema, insbesondere im Bereich des Berg- bzw. Tagebaues, wo gleichbleibende Transportstrecken mit möglichst hoher Frequenz befahren werden. Insbesondere die dort eingesetzten Muldenkipper mit höchstem Ladevolumen, d.h. 100t und mehr, werden überwiegend mit diesel-elektrischen Antrieben versehen, bei diesen ein Verbrennungsmotor den integrierten Generator antreibt, der wiederrum die elektrische Energie für die elektrischen Antriebsmotoren liefert.

Im Tagebau legen die Muldenkipper von der Beladungsposition bis zum Zielort längere Fahrstrecken mit geradlinigem Verlauf zurück. Zur Reduzierung des Dieselverbrauchs sowie des CO₂-Ausstoss der Fahrzeugflotte wird der Fahrabschnitt mit geradem Verlauf mit einem Oberleitungssystem für die Fahrzeuge bestückt. Die Fahrzeuge selbst können in diesem Bereich mit Hilfe ihrer installierten Stromabnehmer die notwendige Energie für die Versorgung der elektrischen Fahrmotoren abgreifen. Neben dem maßgeblichen eingesparten Dieselverbrauch kann optional auch eine Leistungssteigerung erreicht und die Fahrtdauer reduziert werden. DE 10 2011 076623 A1, EP 1 086 845 A1 offenbaren System umfassend Oberleitungssystem und Fahrzeug mit Stromabnehmern gemäss dem Stand der Technik.

Aufgrund des überwiegend geraden Streckenverlaufs werden Pantographen als Stromabnehmer verbaut, da diese eine einfache und schnelle mechanische Kontaktierung der Oberleitung auch während der Fahrbewegung zulassen. Ein Nachteil dieser Technik besteht jedoch darin, dass der besagte Stromabnehmertyp einen geradlinigen Streckenverlauf voraussetzt und damit für Strecken mit engem Kurvenverlauf ungeeignet ist, wie dies regelmäßig im Bergbau mit den kurvigen Bergstraßen der Fall ist.

In jüngster Vergangenheit bestand jedoch der Wunsch, auch für die dort eingesetzten Muldenkipper eine geeignete externe Versorgung mit elektrischer Energie bereitzustellen. Die Aufgabe der vorliegenden Anmeldung beschäftigt sich daher mit der Entwicklung eines geeigneten Oberleitungssystems für kurvige Streckenverläufe sowie von Baumaschinen mit passenden Stromabnehmern.

Gelöst wird diese Aufgabe durch ein System gemäß den Merkmalen des Anspruch 1. Vorteilhafte Ausgestaltungen des Systems sind Gegenstand der abhängigen Ansprüche.

Erfindungsgemäß wird vorgeschlagen ein Oberleitungssystem für Baumaschinen mit Stromabnehmern bereitzustellen, die jeweils eine Stange mit endseitigem Stromabnehmerkopf zur Kontaktierung einer einzelnen Leitung aufweisen. Die Stromabnehmerköpfe können mit einem Schleifschuh, einer Rolle oder ähnlichem ausgestattet sein und werden von unten an die Leitung gedrückt und durch den Schleifschuh, die Rolle, etc. geführt. Bspw. umfasst ein solcher Schleifschuh eine halbe Nut/Rundung, welche mit der runden Stromleitung/Seil in Kontakt gebracht wird. Der vorstehend genannte Stromabnehmertyp ist auch für Oberleitungen mit kurvigem Verlauf geeignet. Die mechanische Verbindung erfordert jedoch eine zielgenaue Ausrichtung der Stromabnehmerköpfe zur zugeordneten Oberleitung während der Konnektierungsphase, was eine exakte Positionierung der Baumaschine unterhalb der Oberleitung während dieser Konnektierungsphase notwendig macht. Während der Fahrbewegung ist dies bislang kaum zu realisieren, so dass die Fahrzeuge bisher unterhalb der Oberleitung angehalten werden, um die Stromabnehmer in Ruhe zur Oberleitung ausrichten zu können. Der damit verbundene Zwangstop verlängert jedoch die Zykluszeit für einen Lade- und Abladeprozess, was in wirtschaftlicher Sicht bei den verhältnismäßig hohen Investitionssummen in die Fahrzeugflotte nicht erwünscht oder akzeptabel ist. Ferner bedeutet jeder Brems- und Beschleunigungsprozess im Miningbetrieb eine Beeinträchtigung der Effizienz des gesamten Miningprozesses. Neben der dadurch bedingt verstärkten Beanspruchung des Fahrweges sowie der Fahrzeugbereifung nimmt auch der Gesamtenergiebedarf zu.

Vor diesem Hintergrund wird erfindungsgemäß vorgeschlagen, die parallel verlaufenden und gegenpoliges Potenzial führenden Leitungen mit geeigneten Führungshilfen zu versehen, die eine exakte Positionierung und Ausrichtung der Stromabnehmer zur Oberleitung unterstützen und dadurch stark vereinfachen. Idealerweise wird hierdurch eine einfache Kontaktierung auch während der Fahrbewegung der Baumaschine ermöglicht.

Die Führungshilfe bildet durch ihre Wandungen einen unten offenen Zuführkanal, der sich von dem stirnseitigen Ende der Führungshilfe bis zum gegenüberliegenden Ende der Führungshilfe mit der dort anschliessenden Leitung erstreckt. Die Leitung kann bspw. im Bereich des Zuführkanals oberhalb der Führungshilfe geführt sein und wird erst im Endbereich des Führungskanals wieder nach unten geführt, um hier die Kontaktierung mit dem Stromabnehmer zu ermöglichen. Der in den Zuführkanal eingebrachte Kopf des Stromabnehmers wird innerhalb des Zuführkanals in Fahrtrichtung bis zur an dessen Ende anschliessenden Leitung geführt. Dabei wird die Kanalform in Fahrtrichtung zur anschliessenden Oberleitung schmaler bzw. läuft zusammen, d.h. das Querschnittsprofil des Zuführkanals reduziert sich in Richtung der Oberleitung. Durch die anfängliche große Kanalweite der Führungshilfe vereinfacht sich die Einbringung des entsprechenden Stromabnehmerkopfes in den Zuführkanal. Die in Fahrtrichtung schmaler werdende Kanalform sorgt für die exakte Ausrichtung des Stromabnehmerkopfes zur daran anschliessenden Oberleitung, so dass der Schleifschuh, die Rolle oder sonstiges Kontaktmittel des Stromabnehmerkopfes nach Austritt aus dem Zuführkanal der Führungshilfe auf der Unterseite der Leitung entlang läuft.

Gemäß bevorzugter Ausführung weisen die Führungshilfe(n) eine nach aussen, d.h. entgegen dem benachbarten Leitungspaar gerichtete Verbreiterung der Breite des Zuführkanals auf. Insbesondere ist hier eine parallel zur Leitung verlaufende Seitenwand der Führungshilfe vorgesehen, während die gegenüberliegende Wand von aussen in Richtung der Leitung orientiert ist und dadurch die gewünschte Reduzierung der Kanalbreite in Leitungsrichtung bildet. Eine solche Ausführung hat den Vorteil, dass die Form der Führungshilfe nicht das benachbarte Leitungspaar behindert, so dass die Oberleitung durchgehend mit konstantem Leitungsabstand geführt sein kann.

Denkbar ist es aber ebenfalls, dass die Kanalweite symmetrisch zur Mittelachse der Führungshilfen verbreitert ist und in Leitungsrichtung zur Mittelachse der Führungshilfe zusammenläuft.

Gemäß einer vorteilhaften Ausführung können die Führungsmittel der parallel verlaufenden Leitungen in Fahrtrichtung versetzt zueinander angeordnet sein. Durch die versetzte Anordnung kann eine zeitlich verzögerte mechanische und auch elektrische Kontaktierung der Stromabnehmerköpfe der Baumaschine mit der Oberleitung ermöglicht werden. Idealerweise ist die Führungshilfe der Leitung mit positivem Potential in Fahrtrichtung nach der Führungshilfe der negativen Leitung angeordnet, so dass zunächst eine elektrische Verbindung zum negativen Potential gebildet wird.

Ebenso besteht die Möglichkeit, dass die Führungshilfen eines Leitungspaares in Fahrtrichtung gesehen auf selber Höhe nebeneinander angeordnet sind. Bei einer solchen Ausführung kann optional vorgesehen sein, dass der Abstand der Mittelachsen beider Führungshilfen größer gewählt ist als der Abstand des Oberleitungspaares.

Gemäß einer vorteilhaften Ausführungsform reduziert sich die Kanalbreite der Führungshilfe von seiner stirnseitigen Kanalöffnung in Richtung der anschliessenden Oberleitung. Je größer die Kanalöffnungsbreite desto größer kann die seitliche Abweichung der Ausrichtung des Stromabnehmerkopfes zum Leitungsverlauf sein. Idealerweise zusätzlich aber auch alternativ dazu kann die Kanalhöhe in Richtung zum Leitungsanfang konvergierend sein. Im Idealfall zeigt der Kanal der Führungshilfe einen konischen Verlauf in axialer Richtung, d.h. in Fahrtrichtung. Die Führungshilfe bzw. der Kanal ist an seiner Unterseite, d.h. der dem Boden zugewandten Seite für die Polstangen des Stromabnehmerkopfes geöffnet.

Der Abstand der beiden Leitungen des Oberleitungssystems verläuft in der Regel über die gesamte Fahrstrecke parallel mit nahezu konstantem Abstand. Gemäß einer besonders vorteilhaften Ausführung der Erfindung kann jedoch vorgesehen sein, dass der Abstand beider Leitungen zueinander im Bereich einer Führungshilfe vergrößert ist, um hierdurch Platz für die Dimensionierung der Führungshilfe quer zur Fahrtrichtung zu lassen. Dies ermöglicht ein Design der Führungshilfe mit möglichst großer Kanalbreite, insbesondere ist die anfängliche Kanalbreite größer als der reguläre Abstand zwischen dem Leitungspaar.

Vorzugsweise kann zur Abstandsvergrößerung die parallel zur Führungshilfe der zweiten Leitung verlaufende erste Leitung seitlich nach aussen abgelenkt und in Fahrtrichtung nach der Führungshilfe zurückgelenkt werden, um den Abstand wieder auf das Normalmaß zu reduzieren.

Zur Unterstützung des Fahrers der Baumaschine während der Positionierung für den Oberleitungsbetrieb kann vorgesehen sein, dass der Fahrboden im Bereich unterhalb wenigstens einer Führungshilfe oder kurz davor mit ein oder mehreren visuellen Kennzeichnungen als Leithilfe versehen ist. Geeignet ist beispielsweise ein entsprechendes visuelles Leitsystem, das den Fahrer bereits frühzeitig auf die benötigte Ausrichtung und Positionierung der Baumaschine unterhalb des Oberleitungssystems hinweist. Ein solches System kann in der einfachsten Variante ein oder mehrere auf den Fahrboden aufgebrachte grafische Markierungen umfassen. Denkbar ist es ebenso, stattdessen mit optischen Projektionen auf den Fahrboden zu arbeiten. Vorstellbar ist auch ein Einsatz geeigneter Leuchtmittel zur Realisierung eines aus maritimen Anwendungen bekannten Leuchtfeuers. Leuchtmittel, insbesondere LEDs erzeugen ein oder mehrere farbliche Lichtbereiche zur Kennzeichnung eines gewünschten Fahrkorridors für die Baumaschine. So ein System kann den Fahrer auch während der Fahrt unterstützen, um das Fahrzeug möglichst unterhalb der Stromleitung zu fahren. Dies kann auch über die Darstellung der Position von Fahrzeug zu Stromleitung auf einem Bildschirm erfolgen. Gegebenenfalls mit dem Hervorheben der zulässigen maximalen seitlichen Abweichungen - visuell oder auch akustisch. Dies kann auch zu einer autonomen Fahr-/Lenksteuerung beitragen.

Neben dem erfindungsgemäßen Oberleitungssystem betrifft die vorliegende Erfindung eine Baumaschine, insbesondere eine Baumaschine für den Berg- und/oder Tagebau, die durch einen elektrischen Fahrantrieb gekennzeichnet ist. Erfindungsgemäß weist eine solche Baumaschine im Gegensatz zu bisher bekannten Fahrzeugen Stangenstromabnehmer mit wenigstens zwei separaten Stromabnehmerköpfen auf. Erfindungsgemäß sind diese Stangenstromabnehmer in Vertikal als auch in Horizontalrichtung, d.h. quer zur Fahrtrichtung, aktiv mittels passender Antriebe bewegbar. Idealerweise lassen sich die einzelnen Stangenstromabnehmer sowohl in Vertikal als auch in Horizontalrichtung unabhängig voneinander verstellen. Eine solche Baumaschine eignet sich dadurch für einen Oberleitungsbetrieb mit kurvigem Verlauf der Leitung. Insbesondere ist eine solche Baumaschine für den Betrieb mit einem Oberleitungssystem gemäß der vorliegenden Erfindung geeignet. Neben der aktiven Verstellmöglichkeit ist vorzugsweise auch eine passive Verstellung in Vertikal- und/oder Horizontalrichtung, vorzugsweise durch Kraftaufbringung des Oberleitungssystems möglich.

Das Anpressen der Stromabnehmer an die Oberleitung findet während der Fahrt statt. Hierzu kann ein geeignetes System vorgesehen sein, dass für einen automatischen Ausgleich horizontaler und/oder vertikaler Fahrzeugbewegungen relativ zu den Stromleitung, bspw. hervorgerufen durch Lenkbewegungen und/oder den unebenen Strassenverlaufs, sorgt. Vorstellbar ist hier ein mechanisches System, das optional hydraulisch und/oder elektrisch unterstützt wird.

In einer vorteilhaften Ausführungsform der Baumaschine ist diese als Muldenkipper mit einer aufstellbaren Mulde zur Aufnahme von Stück- oder Schüttgut ausgestaltet. Das aufgenommene Stück- bzw. Schüttgut und die Aufstellmechanik der Mulde beeinträchtigen die dachseitige (auf der Fahrzeugoberseite) Montage der Stromabnehmer. Stattdessen wird gemäß vorteilhafter Ausführung vorgeschlagen, die Stromabnehmer, insbesondere die Polstangen mit den endseitigen Köpfen, insbesondere Schleifschuhen gelenkig an der Fahrzeugfront zu montieren. Mittels der Gelenkverbindung lassen sich die Polstangen für den Oberleitungsbetrieb aufrichten. Für den autarken Betrieb der Baumaschine können die Polstangen abgesenkt und auf dem Fahrzeug abgelegt werden, insbesondere um eine Horizontalachse quer zur Fahrtrichtung verstellt werden. Durch einen zusätzlichen Freiheitsgrad der Polstangen um eine Achse in Fahrtrichtung können gewisse Querabweichungen der Fahrzeugposition zur Längsrichtung der Oberleitung ausgeglichen werden, da die Polstangen dann bspw. in Fahrtrichtung gesehen nach rechts oder links aktiv und passiv geneigt werden können.

Vorteilhaft ist zudem eine seitlich zum Fahrerhaus versetzte Anordnung der Polstangen an der Baumaschine, um das Sichtfeld des Fahrers durch die Polstangen nicht zu beeinträchtigen. Im Idealfall ist die Anordnung versetzt zum Fahrerhaus auf der Seite des Fahrbahnrandes. Dies ermöglicht dann die besten Sichtverhältnisse für den Fahrer und die Stromleitung kann mit einer kurzen Auskragung von den Stromleitungsstützen eingerichtet werden.

Für die gelenkige Anbindung der Polstangen wird vorzugsweise ein Trägergestell konstruiert, das bevorzugt starr an der Fahrzeugfront montiert ist und eine Aufnahmeplattform für die gelenkige Anbindung der Polstangen umfasst. Das Trägergestell besteht gemäß bevorzugter Ausführung aus mehreren Trägerstangen. Idealerweise sind wenigstens zwei Trägerstangen an der vorderen Unterkante des Fahrzeugrahmens montiert, während wenigstens zwei Trägerstangen an der oberen Kante, beispielsweise auf der Plattform des Muldenkippers befestigt sind. Die Trägerstangen erstrecken sich von der Fahrzeugfront schräg nach vorne oben. Vorzugsweise laufen die freien Enden der Trägerstangen zu der gemeinsamen Aufnahmeplattform für die Polstangen zusammen.

Weiterhin kann vorgesehen sein, dass die Baumaschine ein Vordach im Bereich der Fahrzeugfront aufweist. Gemäß üblicher Bauweise von Muldenkippern ragt die Mulde über eine Fahrzeugplattform im Bereich der Fahrzeugfront. Da ein Absenken der Stromabnehmerköpfe unterhalb des Vordaches wünschenswert ist, kann das Vordach an dieser Stelle mit einer entsprechenden Ausnehmung versehen sein. Insbesondere lassen sich die Stromabnehmerköpfe auf eine unterhalb des Vordaches liegende Aufnahmevorrichtung absenken. Ein Vorteil dieser Ausführung besteht darin, dass sich dadurch das Verhältnis zwischen Fahrzeuglänge und Polstangenlänge optimieren lässt. Die Ausnehmung der Mulde ermöglicht auch eine kürzere Bauweise des Fahrzeuges, wodurch das Fahren enger Radien in Verbindung mit der Verstellmöglichkeit der Stromabnehmer möglich macht.

Aufgrund der Absenkung der Stromabnehmerköpfe unterhalb eines Vordaches liegen diese geschützt vor Umwelteinflüssen. Ferner wird durch die Ablage der Stromabnehmerköpfe die Wartungsfreundlichkeit verbessert, den zu Wartungs- und Reparaturzwecken sind die Stromabnehmerköpfe einfach über die Fahrzeugplattform zugänglich. Die Stromabnehmerköpfe sind oftmals mit Verschleissbauteilen ausgestattet, die regelmäßig getauscht werden müssen. Zu nennen sind an dieser Stelle die Schleifschuhe.

Von Vorteil ist eine Modifikation des Vordaches im Bereich der Ausnehmung, insbesondere mit einer erhöhten Kantenschwelle, um das Herabrollen von Stück- und Schüttgütern über die Kante der Ausnehmung und das Herunterfallen der Steine auf die darunter liegenden Stromabnehmer zu verhindern.

Für den Übergang in den Oberleitungsbetrieb müssen die Polstangen der Baumaschine zunächst aufgerichtet werden, wobei dies im Falle des erfindungsgemäßen Oberleitungssystems auch zeitlich verzögert erfolgen kann. Idealerweise umfasst die Baumaschine eine geeignete Steuereinheit, die ein automatisches Aufstellen der Polstangen auslöst, sobald die Baumaschine eine entsprechende Position unterhalb der Oberleitung einnimmt bzw. der Fahrer einen manuellen Steuerbefehl erteilt. Gleiches gilt bevorzugt beim Übergang vom Oberleitungsbetrieb in den autarken Betrieb. Ebenso kann die Steuereinheit während des Übergangs in den Elektrobetrieb oder auch danach während des elektrischen Fahrbetriebes eine horizontale Verlagerung der Stromabnehmerköpfe zur passenden Ausrichtung zur Oberleitung automatisch vornehmen. Während der Fahrt an der Stromleitung erfolgt vorzugsweise keine aktive Verstellung der Stromabnehmer in horizontaler und/oder vertikaler Richtung. Stattdessen erfolgt hier nur eine passive Verbindung durch den Anpressdruck.

Denkbar ist es, dass an der Baumaschine ein oder mehrere Spiegel und/oder Kameras vorgesehen sind, die dem Fahrer eine Kontrolle der ordnungsgemäßen Kontaktierung der Stromabnehmer mit der Oberleitung gestatten.

Vorstellbar ist ebenso, dass die Baumaschine mit einem visuellen System zur Unterstützung des Fahrzeugführers während des Konnektierungsprozesses der Stromabnehmer mit der Oberleitung und/oder während des Fahrbetriebes im Oberleitungsmodus unterstützt. Durch letzteres wird der Fahrer auch während der Fahrt unterstützt, um das Fahrzeug möglichst unterhalb der Stromleitung zu fahren. Dies kann bspw. auch über die Darstellung der Position von Fahrzeug zu Stromleitung auf einem Bildschirm der Baumaschine erfolgen. Gegebenenfalls mit dem Hervorheben der zulässigen maximalen seitlichen Abweichungen - visuell oder auch akustisch. Denkbar ist auch eine Umsetzung einer autonomen Fahr-/Lenksteuerung im Oberleitungsbetrieb.

Neben der Betätigung der Aktoren für die Stromabnehmer kontrolliert die Steuereinheit auch die interne Leistungselektronik der Baumaschine, um die elektrische Versorgung der Antriebsmotoren von der internen Quelle auf die externe Versorgung durch die Oberleitung umzustellen. Gleiches gilt optional für einen etwaigen Rekuperationsbetrieb des Fahrzeuges.

Besonders vorteilhaft ist es, wenn die Baumaschine als Muldenkipper mit einem Ladevolumen von etwa 50 bis 200t, bevorzugt zwischen 80 t bis 150 t, idealerweise etwa 100 t ausgeführt ist.

Von der Erfindung umfasst ist ebenso ein Gesamtsystem bestehend aus einem Oberleitungssystem, insbesondere gemäß der genannten Erfindung, und wenigstens einer Baumaschine gemäß den vorstehenden Ausführungen. Die aktive Verstellmöglichkeit der Stromabnehmerstangen bzw. Stromabnehmerköpfe in Vertikalals auch Horizontalrichtung ermöglicht eine universelle Einsatzmöglichkeit für unterschiedlichste Oberleitungssysteme.

Zuletzt ist von der Erfindung auch noch die besondere Verwendung des vorgenannten Gesamtsystems für die Versorgung wenigstens einen Baumaschine mit elektrischer Energie auf einer Bergstrasse umfasst. Insbesondere bei Bergstrassen mit engem Kurvenverlauf spielt das System seine volle Stärke aus.

Weitere Vorteile und Eigenschaften der Erfindung sollen nachfolgend anhand eines in den Figuren gezeigten Ausführungsbeispiels näher erläutert werden. Es zeigen:
- Fig. 1:: eine perspektivische Seitenansicht des erfindungsgemäßen Muldenkippers mit einem Teil der neuartigen Oberleitung,
- Fig. 2:: eine Seitenansicht des Muldenkippers gemäß Fig. 1,
- Fig. 3a:: eine Draufsicht auf den Muldenkipper gemäß Figuren 1, 2,
- Fig. 3b:: eine Draufsicht auf die Oberleitung gemäß einer modifizierten Variante,
- Fig. 4:: eine Rückansicht des Muldenkippers gemäß den Figuren 1 bis 3,
- Fig. 5a:: das Ablaufblockdiagramm während des Umschaltens der Baumaschine vom diesel-elektrischen Antrieb auf den Oberleitungsbetrieb bei einem Oberleitungssystem mit versetzt angeordneten Führungshilfen,
- Fig. 5b:: das Ablaufblockdiagramm während des Umschaltens der Baumaschine vom diesel-elektrischen Antrieb auf den Oberleitungsbetrieb bei einem Oberleitungssystem mit parallel angeordneten Führungshilfen,
- Fig. 6a bis 6e:: unterschiedliche Blockdiagramme zur Verdeutlichung des Leistungsflusses des Muldenkippers während seiner unterschiedlichen Betriebsmodi,
- Fig. 7:: ein weiteres Ausführungsbeispiel der Oberleitung mit dem erfindungsgemäßen Muldenkipper und
- Fig. 8:: das Ausführungsbeispiel gemäß Fig. 7 in einer Draufsicht,
- Fig. 9:: eine Seitenansicht des Ausführungsbeispiels gemäß den Figuren 7, 8 und
- Fig. 10:: eine weitere Modifikation des Oberleitungssystems.

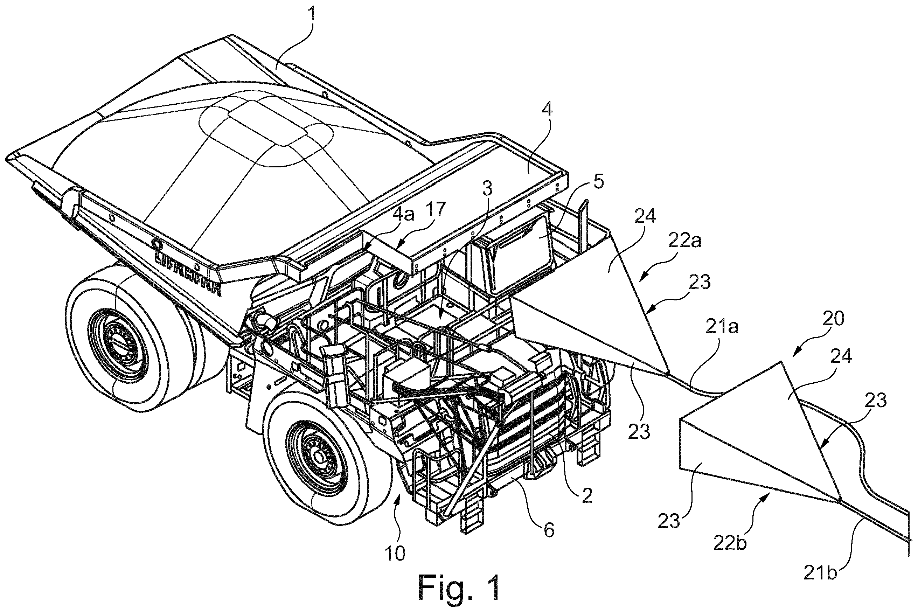

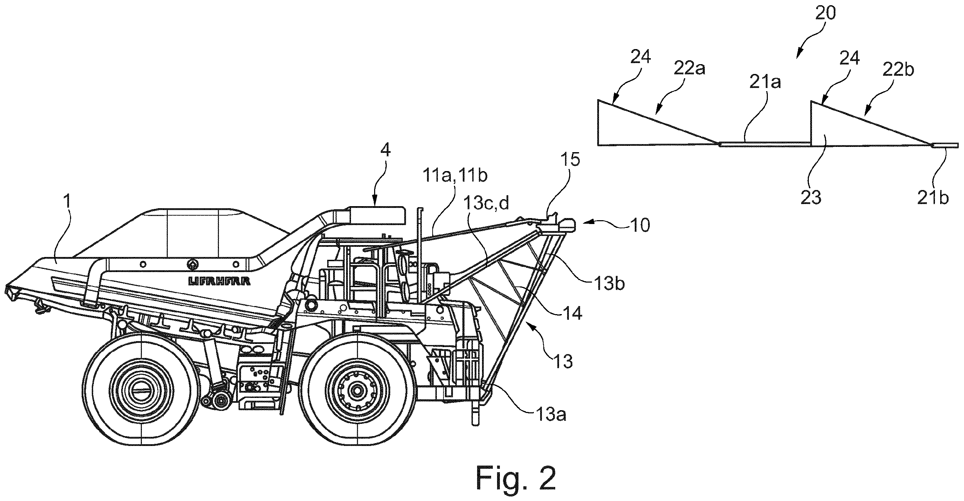

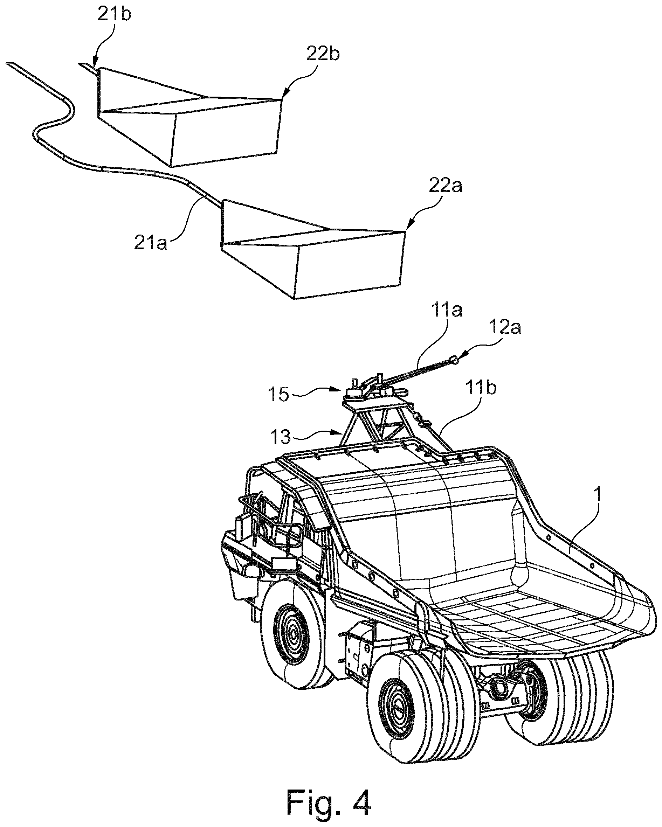

Die Figuren 1 bis 4 zeigen skizzierte Darstellungen des erfindungsgemäßen Muldenkippers, dessen Fahrantrieb im Wesentlichen auf einem diesel-elektrischen Prinzip basiert. Das verbaute Dieselaggregat treibt einen Stromgenerator an, der die wenigstens zwei Elektromotoren der Hinterachse des Muldenkippers speist. Über ein Abzweiggetriebe hängt am Abtrieb des Dieselmotors die Hydraulik des Fahrzeuges, u.a. zum Aufstellung und Absenken der Mulde 1. Der dargestellte Muldenkipper gehört zur Kategorie der sogenannten Small- bzw. Midsize Trucks mit einem Ladevolumen von durchschnittlich 100t. An der Fahrzeugfront ist oberhalb des Kühlers 2 eine Fahrzeugplattform 3 vorgesehen, auf dieser sich u.a. die Fahrerkabine 5 befindet. Eine ebene Fläche 4 der Mulde steht über die Plattform 3 in Form eines Vordaches 4 über.

Das gezeigte Fahrzeug soll insbesondere im Bergbau auf kurvigen Bergstraßen eingesetzt werden, wobei hier der Wunsch nach einer optionalen externen elektrischen Versorgung des elektrischen Fahrantriebes mittels Oberleitung besteht. Zur Stromabnahme für den Oberleitungsbetrieb umfasst der Muldenkipper Stangenstromabnehmer 10 mit den beiden Polstangen 11a, 11b, an deren freien Enden bzw. Stromabnehmerköpfen Schleifschuhe 12a, 12b zur mechanischen Kontaktierung mit den parallel verlaufenden Stromleitungen 21a, 21b des Oberleitungssystems 20 vorgesehen sind. Die Schleifschuhe umfassen in der Regel ein austauschbares Kohleschleifstück. Die Schleifschuhe 12a, 12b umfassen jeweils eine halbe Nut/Rundung, die über die Polstangen 11a, 11b von unten an die Leitungen 21a, 21b gedrückt wird. Nach erfolgreicher mechanischer Kontaktierung mit den Leitungen 21a, 21b kann über die elektrische Verbindungsleitung der Polstangen 11a, 11b die elektrische Energie der Oberleitung für die Versorgung des internen Fahrantriebes des Muldenkippers abgegriffen werden.

Im autarken Betrieb des Muldenkippers ohne Versorgung aus der Oberleitung 20 werden die Polstangen 11a, 11b, respektive die Stromabnehmerköpfe 12a, 12b auf eine Aufnahmevorrichtung 16 unterhalb des Vordaches 4 im Bereich der Plattform 3 abgelegt. Die dazu notwendige gelenkige Anbindung der Polstangen 11a, 11b an der Fahrzeugfront des Muldenkippers erfolgt mit Hilfe einer Trägerstruktur 13 bestehend aus den vier Tragstangen 13a-13d, von denen zwei Tragstangen 13a, 13b an der Unterkante 6 des Fahrzeugrahmens und zwei weitere Tragstangen 13c, 13d auf der Plattform 3 montiert sind. Die Tragstangen erstrecken sich von der Fahrzeugfront nach schräg oben und laufen endseitig zusammen. Die Tragstangen 13a-13d verbindende Querstreben 13 erhöhen die Stabilität der Trägerstruktur 13. Auf einer am zusammenlaufenden Ende der Trägerstangen 13a-13d vorgesehenen Aufnahmeplattform 15 sind die Polstangen 11a, 11b gelenkig angeordnet, und zwar schwenkbar um eine Horizontalachse quer zur Fahrtrichtung und optional um eine parallel zur Fahrtrichtung verlaufende Horizontalachse. Eine verbaute Aktorik erlaubt das gesteuerte Anheben bzw. Absenken der Polstangen 11a, 11b, um den Muldenkipper zwischen einem diesel-elektrischen Betrieb und Oberleitungsbetrieb umschalten zu können. Gleichzeitig können die Polstangen auch seitlich um die parallel zur Fahrtrichtung verlaufende Horizontalachse aktiv mittels eines Antriebs verschwenkt werden. Die Stromabnehmer 10 werden in der Regel nur während des Konnektierungsprozesses aktiv durch die entsprechenden Antriebe bewegt. Während der Fahrt an der Stromleitung 20 erfolgt vorzugsweise keine aktive Verstellung der Stromabnehmer 10 in horizontaler und/oder vertikaler Richtung. Die Stromabnehmer 10 werden jedoch während des Oberleitungsbetriebs mehr oder weniger konstant an die Oberleitung angedrückt. Dazu ist auch ein automatischer Ausgleich horizontaler und/oder vertikaler Fahrzeugbewegungen notwendig. Dazu kann ein mechanisches System vorgesehen sein, das optional hydraulisch und/oder elektrisch unterstützt wird.

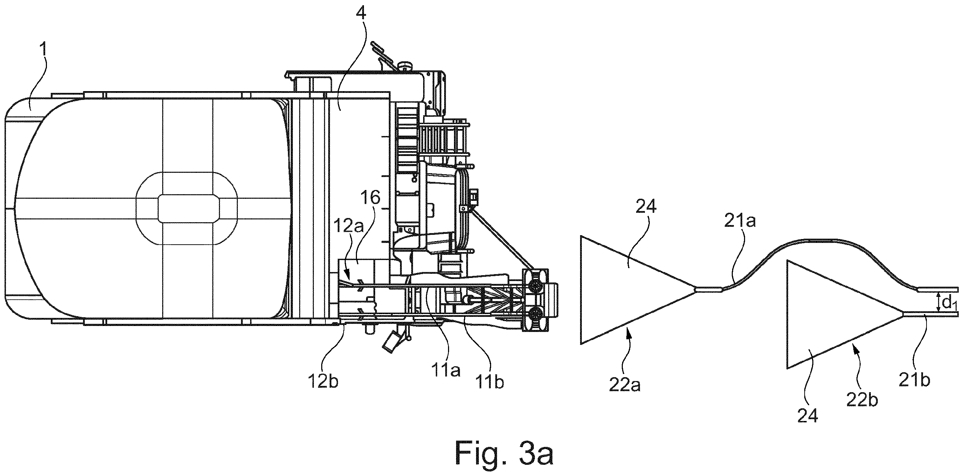

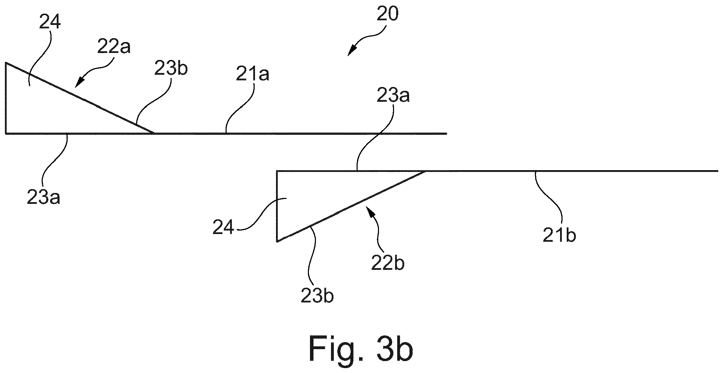

Ersichtlich ist insbesondere in Fig. 3, dass die auf der Aufnahmevorrichtung 16 abgelegten Stromabnehmerköpfe 12a, 12b der Polstangen 11a, 11b zumindest teilweise unter dem Vordach 4 der Mulde 1 geschützt liegen. Für das Aufrichten und Absenken der Polstangen 11a, 11b ist jedoch eine Ausnehmung 4a in das Vordach 4 geschnitten. Der erhöhte Rand 17 des Vordaches 4 verhindert, dass Schüttgut über das Vordach 4 auf die darunterliegenden Stromabnehmer 11a, 11b rollen kann.

Durch den Einsatz der Stangenstromabnehmer 10 kann der Muldenkipper auch für Oberleitungen mit kurvigem Verlauf eingesetzt werden, wie dies bspw. bei einer engkurvigen Bergstraße im Bergbau notwendig ist. Um einen einfachen Übergang in den Oberleitungsbetrieb zu gewährleisten, möglichst ohne den Muldenkipper für die Anbindung der Stromabnehmer 10 an die Oberleitung 20 anhalten zu müssen, ist die Oberleitung 20 mit geeigneten Führungshilfen 22a, 22b versehen.

Die Oberleitung umfasst eine Leitung 21a mit negativem Potential und eine Oberleitung 21b mit positivem Potential. Am jeweiligen Leitungsanfang ist die besagte Führungshilfe 22a, 22b angeordnete, die sich aus zwei dreieckförmigen Seitenwänden 23 sowie einer dreieckförmigen Oberseite 24 zu einer Kastenstruktur zusammensetzen. Die Führungshilfe 22a, 22b ist stirnseitig und unten offen. Die Wände 23, 24 bilden den Zuführkanal, der sich von der stirnseitigen Kanalöffnung 25 in Richtung des Leitungsanfangs verengt, d.h. sowohl die Kanalbreite als auch die Kanalhöhe reduziert sich in Fahrtrichtung.

Der ausgeklappte bzw. nach oben ausgefahrene Stromabnehmerpol 11a, 11b wird nunmehr mit seinem Kopf bzw. Schleifschuh 12a, 12b während der Fahrbewegung stirnseitig bzw. von unten in die Führungshilfe 22a, 22b eingebracht. Aufgrund der in Richtung der Leitung zusammenlaufenden Seitenflächen 23, 24 wird der Stromabnehmerkopf 12a, 12b über die Seitenflächen geführt bis dieser punktgenau die Leitung 21a, 21b kontaktiert und dadurch optimal positioniert wird. Die Kontaktierung der Stromabnehmer 10 erfolgt zunächst mechanisch (Anpressen) und dann elektrisch.

Im Ausführungsbeispiel der Figuren 1 bis 4 sowie 3b sind die Führungshilfen 22a, 22b zudem versetzt in Fahrtrichtung hintereinander angeordnet, wobei die Führungshilfe 22a der Leitung 21a mit negativen Potential zuerst angeordnet ist und die Führungshilfe 22b der positiven Leitung 21b dazu versetzt folgt. Dadurch werden die Pole des Stromabnehmers 10 des Muldenkippers temporär verzögert an die Oberleitung 20 angebunden, d.h. zuerst erfolgt die Kontaktierung des negativen Potentials mit der zeitlich gefolgten Kontaktierung des positiven Potentials.

Ein weiterer Vorteil dieses axialen Versatzes der Führungshilfen 22a, 22b in Oberleitungsrichtung besteht darin, dass diese dadurch breiter ausgeführt werden können ohne sich gegenseitig zu behindern. Auch ist die Breite, d.h. die Breite der Oberseite 24 größer als der eigentliche Abstand d₁ zwischen den Leitungen 21a, 21b gewählt (s. Figur 3). Dazu muss jedoch der parallel zur nachgeordneten Führungshilfe 22b verlaufende Leitungsabschnitt der Leitung 21a seitlich ausgelenkt werden, um eine Kontaktierung mit der Führungshilfe 22b zu vermeiden.

Im Ausführungsbeispiel der Figuren 1, 2, 3, 4 laufen beide Seitenwände 23 von aussen nach innen, so dass sich die Kanalbreite in Längsrichtung der Führungshilfe 22a, 22b symmetrisch reduziert. Eine dazu modifizierte Ausführung der Führungshilfen 22a, 22b ist in Figur 3b dargestellt. Dort verlaufen die inneren Seitenwände 23a parallel zur Oberleitung 21a, 21b, lediglich die äusseren Seitenwände 23b sind geneigt zur Oberleitungsachse angeordnet und verlaufen in Längsrichtung von aussen nach innen in Richtung der Oberleitung 21a, 21b. Die Kanalbreite der Führungshilfe 22a, 22b ist daher nur nach aussen vergrößert, so dass der Abstand der Oberleitungen 21a, 21b auch im Bereich der Führungshilfen 22a, 22b unverändert bleiben kann.

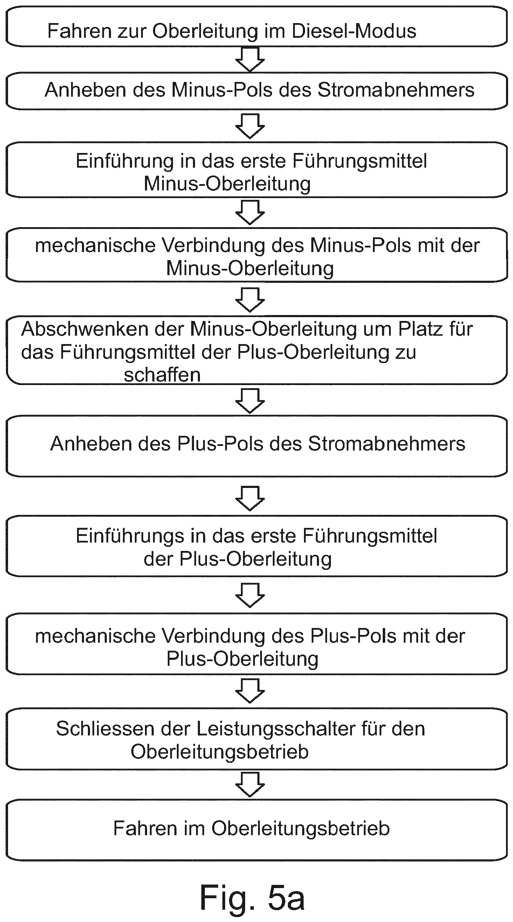

Der grundsätzliche Ablauf während des Übergangs vom diesel-elektrischen Antriebsmodus in den Oberleitungsbetrieb ist dem Ablaufdiagramm der Figur 5a zu entnehmen. Im ersten Schritt wird der Muldenkipper zunächst mit diesel-elektrischem Antrieb gefahren. Kurz vor Erreichen des Startpunktes der Oberleitung 20 wird zunächst die Polstange 11a für das negative Potential angehoben und über die erste Führungshilfe 22a in mechanische Verbindung mit der Minusoberleitung 21a gebracht. Gegebenenfalls wird die Polstange 11a hierfür auch noch mittels des entsprechenden Antriebs aktiv um die parallel zur Fahrleitung 21a verlaufende Schwenkachse verschwenkt, um das Einbringen in die Führungshilfe 22a zu erleichtern.

Ist die mechanische Kontaktierung zwischen dem negativen Strompol 11a und der entsprechenden Oberleitung 21a erfolgt, wird anschließend die Polstange 11b für das positive Potential angehoben und mittels der zweiten Führungshilfe 22b mit der entsprechenden Oberleitung 21b in Kontakt gebracht. Auch hier kann eine aktive Verschwenkung der Polstange 11b um die parallel zur Fahrleitung 21b verlaufende Schwenkachse hilfreich sein. Im Anschluss wird in der Leistungselektronik des Muldenkippers der Betrieb des Fahrzeugs vom dieselelektrischen Antrieb auf den Oberleitungsbetrieb durch Betätigung der oder des entsprechenden Leistungsschalters umgeschaltet, wodurch das Fahrzeug letztendlich im Oberleitungsbetrieb fahren kann.

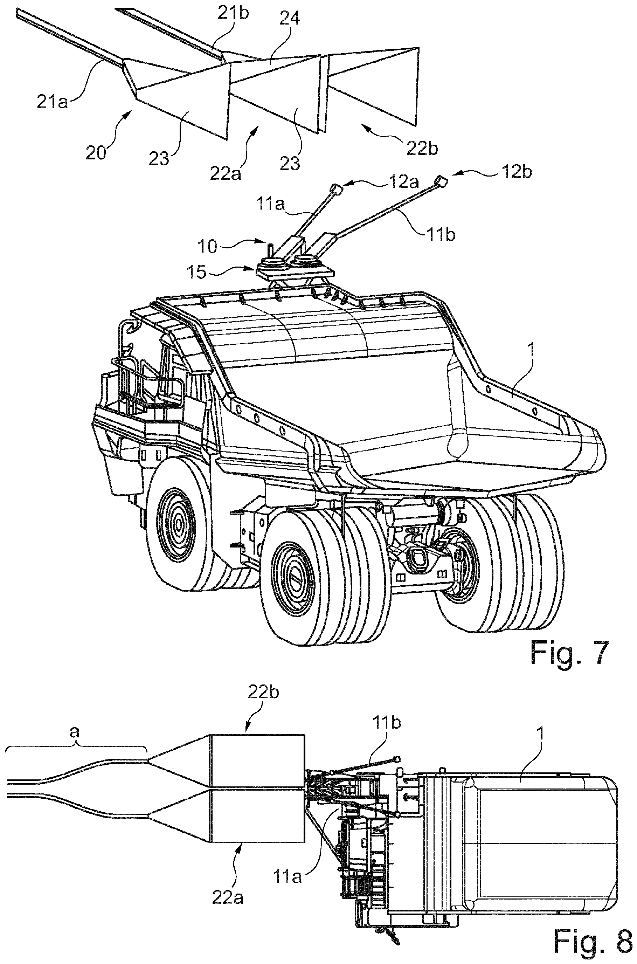

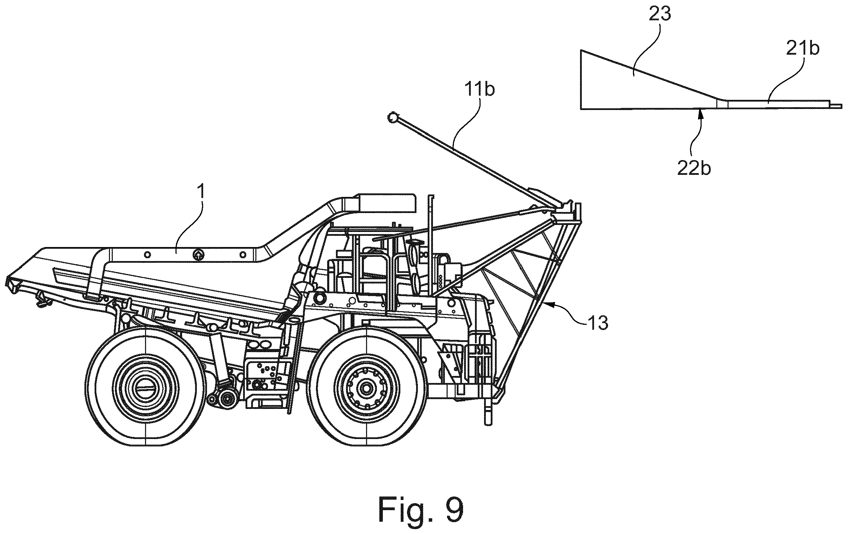

Die erfindungsgemäße Ausgestaltung des Muldenkippers mit Stangenstromabnehmern 10, deren Polstangen 11a, 11b sowohl in Vertikalrichtung als auch in Horizontalrichtung aktiv verlagert werden können, erlaubt den Einsatz des Muldenkippers für unterschiedliche Oberleitungssysteme. Eine Alternative zur Variante der Figuren 1 bis 4 ist in den Figuren 7 bis 9 dargestellt. Der dort wiedergegebene Muldenkipper ist identisch zur Ausführung in den Figuren 1 bis 4. Der einzige Unterschied besteht in der Anordnung der Führungshilfen 22a, 22b des Oberleitungssystems 20, die in den Figuren 7 bis 9 nicht mehr versetzt, sondern unmittelbar nebeneinander am Anfang der Oberleitung 20 platziert sind.

Insbesondere der Draufsicht der Figur 8 lässt sich entnehmen, dass für eine solche Anordnung der Abstand der Leitungen 21a, 21b zu Beginn der Oberleitung, in Figur 8 als Abschnitt a gekennzeichnet, deutlich größer sein muss, um auch in diesem Ausführungsbeispiel eine möglichst große Kanalöffnung der Führungshilfen 22a, 22b realisieren zu können. Da der Abstand der Polstangen 11a, 11b üblicherweise auf den Standardabstand der Oberleitung 20 angepasst ist, müssen die Polstangen 11a, 11b vor der Einbringung in die Führungshilfen 22a, 22b bzw. vor der Kontaktierung mit den Leitungen 21a, 21b nach aussen um die parallel zur Leitung 21a, 21b verlaufende Schwenkachse der Polstangenlagerung aktiv verschwenkt werden. In den Figuren 7 bis 9 ist eine um etwa 10 Grad verschwenkte Position der Polstangen 11a, 11b ersichtlich. Entgegen der Ausführung in den Figuren 1 bis 4 werden die Polstangen während der Fahrt dynamisch ausgerichtet und gleichzeitig mit den jeweiligen Oberleitungen 21a, 21b konnektiert.

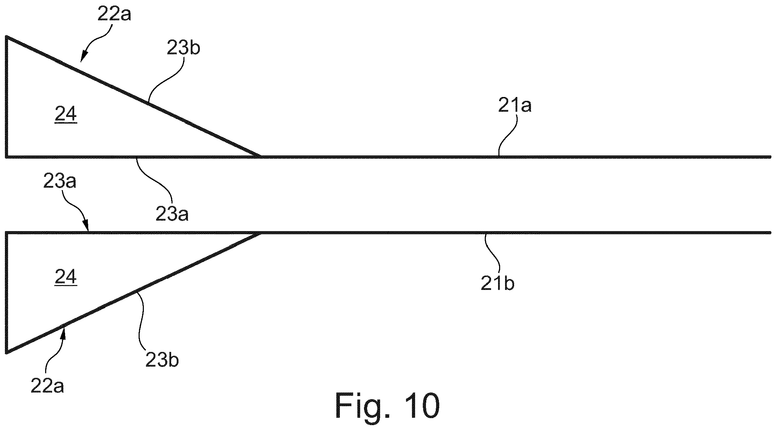

Das entsprechende Pendant zur Modifikation der Figur 3b ist in Figur 10 dargestellt. Bei der dortigen Ausführung der Führungshilfen 22a, 22b läuft nur die äussere Seitenwand 23b von aussen nach innen, während die innere Seitenwand 23a parallel zur Oberleitung 21a, 21b verläuft. Wie in der Ausführung der Figuren 7 bis 9 sind hier die Führungshilfen 22a, 22b parallel nebeneinander angeordnet. Da sich hier der Kanal jedoch nur nach aussen verbreitert, kann der Abstand der Oberleitungen 21a, 21b zueinander über den gesamten Verlauf, zumindest jedoch im Bereich der Führungshilfen 22a, 22b konstant bleiben.

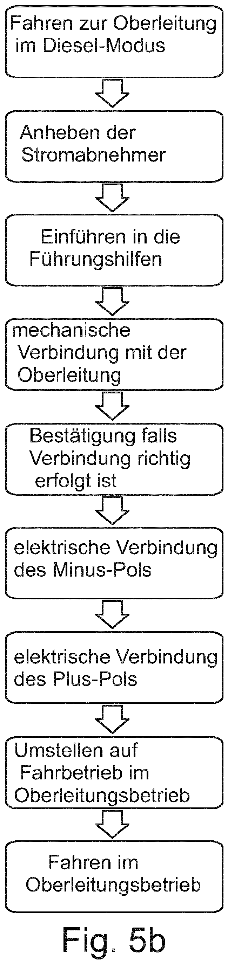

Der grundsätzliche Ablauf während des Übergangs vom diesel-elektrischen Antriebsmodus in den Oberleitungsbetrieb bei einer Ausführung des Oberleitungssystems gemäß der Figuren 7 bis 10 bis gemäß Figur 10 ist dem Ablaufdiagramm der Figur 5b zu entnehmen. Im ersten Schritt wird der Muldenkipper zunächst mit diesel-elektrischem Antrieb gefahren. Kurz vor Erreichen des Startpunktes der Oberleitung 20 werden beide Polstangen 11a, 11b zeitgleich angehoben und über zugeordneten Führungshilfen 22a, 22b in mechanische Verbindung mit dem Oberleitungspaar 21a, 21b gebracht. Gegebenenfalls werden die Polstange 11a, 11b hierfür auch noch mittels des entsprechenden Antriebs aktiv um die parallel zur Fahrleitung 21a, 21b verlaufende Schwenkachse verschwenkt, um das Einbringen in die Führungshilfe 22a, 22b zu erleichtern. Nach erfolgter Bestätigung der ordnungsgemäßen mechanischen Kontaktierung erfolgt zunächst die Herstellung der elektrischen Verbindung zwischen der Oberleitung mit negativen Potential und der Fahrzeugelektronik. Zeitversetzt dazu erfolgt dann die elektrische Konnektierung mit dem positiven Potential. Im Anschluss wird in der Leistungselektronik des Muldenkippers der Betrieb des Fahrzeugs vom dieselelektrischen Antrieb auf den Oberleitungsbetrieb durch Betätigung der oder des entsprechenden Leistungsschalters umgeschaltet, wodurch das Fahrzeug letztendlich im Oberleitungsbetrieb fahren kann.

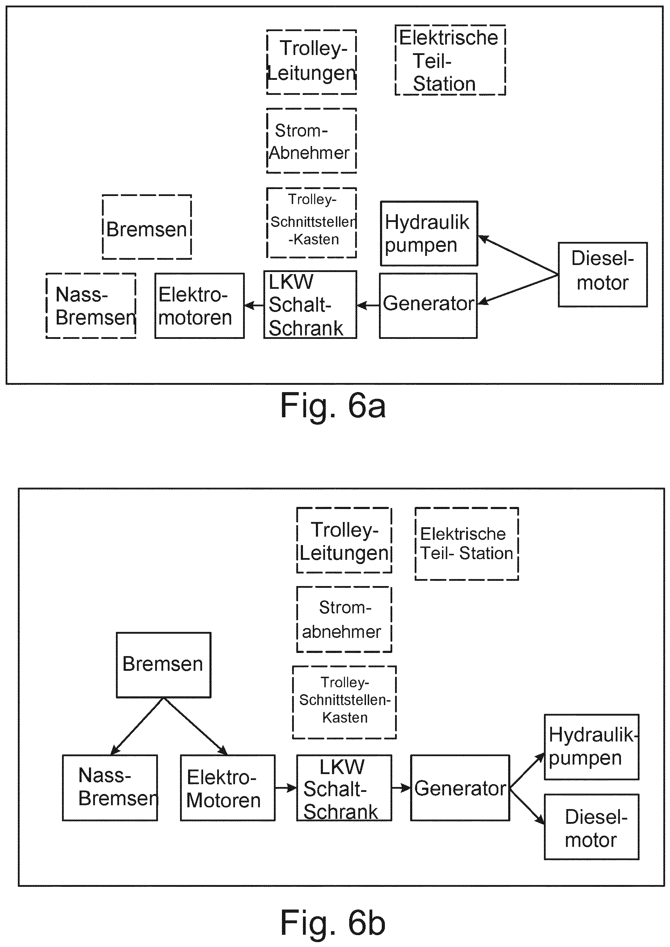

Der entsprechende Leistungsfluss während der unterschiedlichen Betriebszustände des Muldenkippers ist in den Figuren 6a bis 6c gekennzeichnet. Die Figur 6a zeigt dabei den regulären dieselelektrischen Fahrbetrieb, während diesem das Dieselaggregat sowohl die Hydraulikpumpen als auch den Generator antreibt, wobei letzterer bei entsprechender Schaltstellung der Leistungselektronik die elektrischen Antriebsmotoren speist.

Beim Abbremsen des Fahrzeugs im dieselelektrischen Fahrbetrieb wird die Bremswirkung neben einer konventionellen mechanischen Bremse auch durch die im Generatorbetrieb agierenden elektrischen Antriebsmotoren erzielt. Die rückgewonnene Generatorenergie wird über die Leistungselektronik zurück an den eigentlichen Generator bereitgestellt, dieser als Elektromotor die Motorwelle und/oder die Hydraulik unterstützend antreibt (siehe Figur 6b).

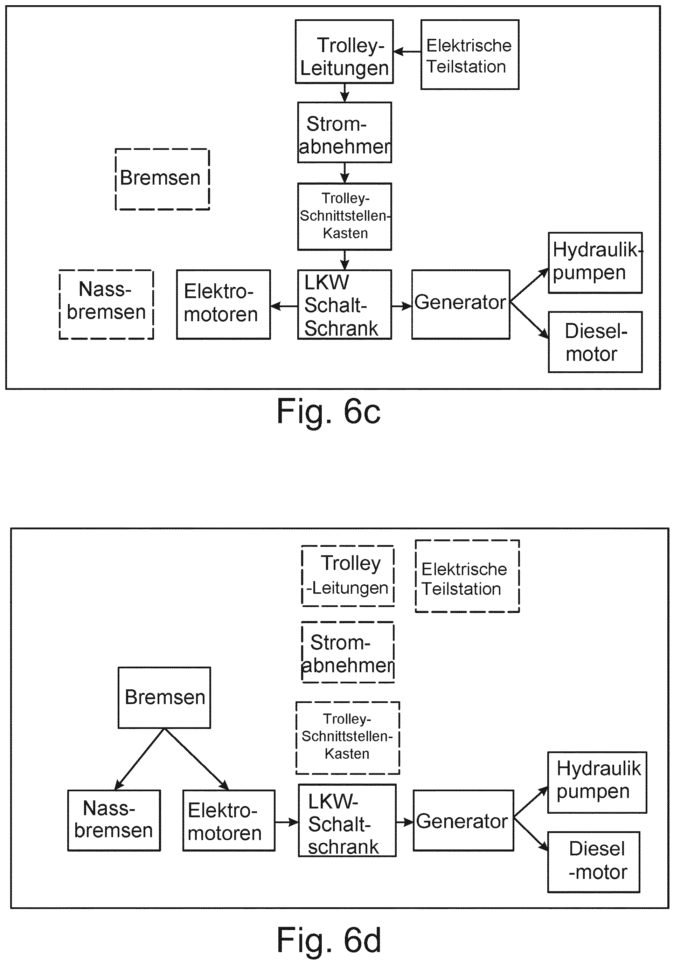

Figur 6c zeigt nunmehr den Fahrbetrieb des Fahrzeugs über die Oberleitungsversorgung. Über die Stromabnehmer 10 und die entsprechende Steuereinheit, die die automatische Betätigung der Stromabnehmerpole 11a, 11b bewerkstelligt, wird die elektrische Energie von der Leistungselektronik sowohl auf die elektrischen Antriebsmotoren als auch zum Generator bereitgestellt, dieser im Motorbetrieb ebenfalls unterstützend auf die Hydraulikpumpe bzw. das Dieselaggregat einwirkt. Bei der Bergfahrt unterstützt das elektrische System über den Generator auch das mechanisch/hydraulische System, der Verbrennungsmotor läuft nur mit minimaler Drehzahl. Es wird dadurch Kraftstoff eingespart.

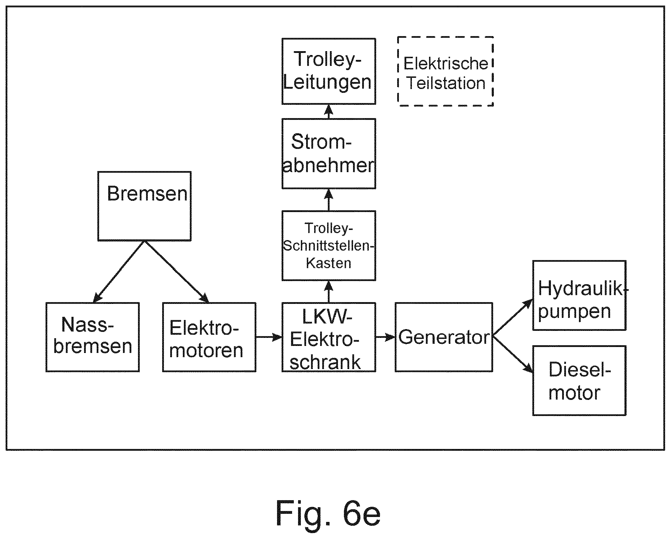

Die Figuren 6d, 6e zeigen unterschiedliche Rekuperationsverfahren beim Abbremsen des Fahrzeugs, insbesondere während der Talfahrt. Gemäß der Ausführung in Figur 6d wird im Oberleitungsbetrieb die während des generatorischen Abbremsens durch die Elektromotoren rückgewonnene elektrische Energie wie in Figur 6b dem eigentlichen Generator zur Verfügung gestellt, der dann als Elektromotor die Dieselmotorwelle und/oder die Hydraulik unterstützend antreibt. Ein Energierückfluss in das Oberleitungssystem erfolgt hier nicht. Im Gegensatz dazu wird bei der Ausführung gemäß Figur 6e die durch die Bremswirkung rückgewonnene Energie auch in das Oberleitungssystem zurückgespeist. Alternativ oder zusätzlich dazu könnte die Energie auch in einem internen Speicher des Fahrzeuges gepuffert werden.

## Patentansprüche

1. System umfassend ein Oberleitungssystem (20) zur elektrischen Versorgung des Fahrantriebes ein oder mehrerer Baumaschinen für den Transport von Schütt- bzw. Stückgut, mit einer Oberleitung, welche wenigstens ein Paar parallel entlang der Fahrstrecke verlaufender und gegenpolig stromführender Leitungen (21a, 21b) umfasst, und das System weiter umfassend eine Baumaschine, welche Stangenstromabnehmer (10) umfasst, wobei die Stangenstromabnehmer (10) die Leitungen (21a, 21b) elektrisch kontaktieren,
**dadurch gekennzeichnet,**
**dass** jede Leitung (21a, 21b) endseitig mit wenigstens einer, einen Zuführkanal bildenden Führungshilfe (22a, 22b) zur Aufnahme und Führung des Kopfes der Stangenstromabnehmer (10) ausgestattet ist, wobei der Zuführkanal in Richtung der zugeordneten Leitung zusammenläuft, und dass beide Stangenstromabnehmer (10) mittels Antrieben unabhängig voneinander in Vertikal- und Horizontalrichtung aktiv bewegbar sind.

2. System nach Anspruch 1, **dadurch gekennzeichnet, dass** die Kanalbreite und/oder die Kanalhöhe des Zuführkanals der Führungshilfe (22a, 22b) in Richtung der Leitung (21a, 21b) reduziert wird.

3. System nach einem der Ansprüche 1 oder 2, **dadurch gekennzeichnet, dass** die Führungshilfen (22a, 22b) eines Leitungspaares (21a, 21b) in Fahrtrichtung gesehen auf selber Höhe nebeneinander angeordnet sind, wobei optional der Abstand der Mittelachsen beider Führungshilfen (22a, 22b) größer sein kann als der überwiegende Abstand des Oberleitungspaares (21a, 21b).

4. System nach einem der vorhergehenden Ansprüche 2 oder 3, **dadurch gekennzeichnet, dass** die Kanalbreite jeder Führungshilfe (22a, 22b) durch zwei gegenüberliegende Seitenwände (23, 24) definiert ist, wobei die Seitenwände mit identischer Neigung zur Mittelachse von außen nach innen in Leitungsrichtung zur symmetrischen Reduzierung der Kanalbreite verlaufen oder nur die äußere Seitenwand geneigt zur Mittelachse verläuft, während sich die innere Seitenwand parallel zur Oberleitungsachse erstreckt.

5. System nach einem der vorhergehenden Ansprüche, **dadurch gekennzeichnet, dass** die Führungshilfen (22a, 22b) eines Leitungspaares (21a, 21b) in Fahrtrichtung versetzt zueinander angeordnet sind.

6. System nach Anspruch 5, **dadurch gekennzeichnet, dass** der Abstand zwischen den parallel verlaufenden Leitungen (21a, 21b) im Bereich wenigstens einer Führungshilfe (22a, 22b) vergrößert ist, insbesondere durch ein seitliches Wegführen des Leitungsabschnittes der ersten Leitung, der parallel zur Führungshilfe der zweiten Leitung verläuft und/oder dass die Breite des Zuführkanals wenigstens einer Führungshilfe zumindest anfänglich größer ist als der reguläre Abstand zwischen den parallel verlaufenden Leitungen (21a, 21b).

7. System nach einem der vorhergehenden Ansprüche, **dadurch gekennzeichnet, dass** auf dem Fahrboden im Bereich wenigstens einer Führungshilfe (22a, 22b) eine visuelle Kennzeichnung für den Fahrer der Baumaschine vorgesehen ist, um diesen bei der Einführung der Stromabnehmerköpfe (12a, 12b) in die entsprechende Führungshilfe (21a, 21b) zu unterstützen, insbesondere in Form eine grafischen Aufbringung auf den Fahrboden und/oder einer optischen Projektion auf den Fahrboden und/oder mittels ein oder mehrerer Leuchtmittel zur Ausbildung eines Leuchtfeuers für die Navigation.

8. System nach einem der vorhergehenden Ansprüche, wobei die Baumaschine insbesondere für den Bergbau oder Minenbetrieb konfiguriert ist, und mit elektrischem Fahrantrieb ausgerüstet ist.

9. Baumaschine in elektrischer Verbindung mit einem Oberleitungssystem (20) nach Anspruch 1, **dadurch gekennzeichnet, dass** die Stangenstromabnehmer (10) eine passive Verstellmöglichkeit in horizontaler und/oder vertikaler Richtung vorsehen, wobei eine passive Verstellung erst nach erfolgreicher mechanischer Kontaktierung der Stangenstromabnehmer (10) mit der Oberleitung (21a, 21b) während des Oberleitungsbetriebs des Fahrzeuges erfolgt, um einen möglichst konstanten Anpressdruck der Stangenstromabnehmer (10) an die Oberleitung zu gewährleisten und dass vorzugsweise die Stangenstromabnehmer (10) an der Fahrzeugfront angeordnet sind und/oder seitlich versetzt zu einem Fahrerhaus der Baumaschine, idealerweise außerhalb des Sichtfeldes des Maschinenführers und dass vorzugsweise ein Vordach (4) der Baumaschine, insbesondere bei einer Ausführung der Baumaschine als Muldenkipper, eine entsprechende Ausnehmung umfasst, um ein Absenken der Stromabnehmerköpfe (12a, 12b) auf eine unterhalb des Vordaches (4) liegende Ablaqefläche (3) zu ermöglichen.

10. System nach einem der vorstehenden Ansprüche 8 oder 9, **dadurch gekennzeichnet, dass** ein oder mehrere Spiegel und/oder Kamera/Monitor-Kombinationen vorgesehen sind, um dem Maschinenführer eine visuelle Kontrolle der ordnungsgemäßen Kontaktierung der Stangenstromabnehmer (10) mit dem Oberleitungssystem (20) zu gestatten.

11. System nach einem der Ansprüche 8 bis 10, **dadurch gekennzeichnet, dass** die Kante des Vordaches (4) im Bereich der Ausnehmung eine geeignete Erhöhung bzw. Schwelle vorsieht, um die darunterliegenden Stromabnehmerköpfe (12a, 12b) vor herabfallendem Schütt- bzw. Stückgut zu schützen.

12. System nach einem der Ansprüche 8 bis 11, **dadurch gekennzeichnet, dass** eine Steuereinheit vorgesehen ist, die das Anheben, Absenken und Zentrieren der Stromabnehmerköpfe (12a, 12b) automatisiert während der Fahrtbewegung steuert.

13. System nach einem der Ansprüche 8 bis 12, **dadurch gekennzeichnet, dass** die Baumaschine einen dieselelektrischen Fahrantrieb umfasst und die Steuereinheit derart ausgestaltet ist, so dass zwischen diesel-elektrischem und elektrischem Fahrantrieb des Fahrzeuges umgeschaltet wird, falls der wenigstens eine Stangenstromabnehmer (10) in Kontakt mit dem Oberleitungssystem (20) steht.

14. Verwendung eines Systems nach Anspruch 1 für die Versorgung der wenigstens einen Baumaschine mit elektrischer Energie auf einer Bergstrasse.

## Claims

1. System, comprising an overhead line system (20) for the electrical supply of the travel drive of one or more construction machines for the transport of unit load and bulk load, which comprises at least one pair of lines (21a, 21b) which extend in parallel along the driving route and carry current of opposite polarity, and the system further comprising a construction machine, which comprises trolleys (10), wherein the trolleys (10) electrically contact the line (21a, 21b),
**characterized in that**
each line (21a, 21b) each line is equipped at the end side with at least one guide aid (22a, 22b), which forms a supply channel, for accommodating and guiding the head of the trolleys (10), wherein the supply channel converges in the direction of the associated line, and **in that** both current collectors (10) are actively movable in the vertical and horizontal directions.

2. System according to claim 1, **characterized in that** the channel width and/or the channel height of the supply channel of the guide aid (22a, 22b) is reduced in the direction of the line (21a, 21b).

3. System according to any one of the claims 1 or 2, **characterized in that** the guide aids (22a, 22b) of a line pair (21a, 21b) are arranged at the same level next to one another viewed in the direction of travel, wherein the spacing of the center axes of both guide aids (22a, 22b) optionally can be larger than the predominant spacing of the overhead line pair (21a, 21b).

4. System according to any one of the preceding claims 2 or 3, **characterized in that** the channel width of each guide aid (22a, 22b) is defined by two oppositely disposed side walls (23, 24), wherein the side walls extend with an identical inclination toward the center axis from the outside to the inside in the line direction for a symmetrical reduction of the channel width, or only the outer side wall extends at an incline toward the center axis while the inner side wall extends in parallel with the overhead line axis.

5. System according to any one of the preceding claims, **characterized in that** the guide aids (22a, 22b) of a line pair (21a, 21b) are arranged offset from one another in the direction of travel.

6. System in accordance with claim 5, **characterized in that** the spacing between the lines (21a, 21b) extending in parallel is enlarged in the region of at least one guide aid (22a, 22b), in particular by a lateral leading away of the line section of the first line that extends in parallel with the guide aid of the second line, and/or in that the width of the supply channel of at least one guide aid is at least initially larger than the regular spacing between the lines (21a, 21b) extending in parallel.

7. System according to any one of the preceding claims, **characterized in that** a visual mark is provided on the floor in the region of at least one guide aid (22a, 22b) for the operator of the construction machine to assist him in the introduction of the current collector heads (12a, 12b) into the corresponding guide aid (21a, 21b), in particular in the form of a graphic application to the floor and/or of an optical projection onto the floor and/or by means of one or more illuminants for forming a beacon for navigation.

8. System according to any one of the preceding claims, wherein the construction machine is configured in particular for mining or mining operation, and is equipped with an electric travel drive.

9. Construction machine in electric connection with the overhead line system (20) according to claim 1, **characterized in that** the trolleys (10) provide a passive adjustment possibility in the horizontal and/or vertical directions, with a passive adjustment only taking place after a successful mechanical contact of the trolleys (10) with the overhead line (21a, 21b) during overhead line operation of the vehicle to ensure a contact pressure of the trolleys (10) at the overhead line that is as constant as possible, and **in that** the trolleys (10) preferably are arranged at the vehicle front and/or laterally offset from an operator's cabin of the construction machine, ideally outside the field of view of the machine operator, and **in that** preferably a projecting roof (4) of the construction machine, in particular with a design of the construction machine as a dump truck, comprises a corresponding cutout to enable a lowering of the current collector heads (12a, 12b) onto a placement surface (3) disposed beneath the projecting roof (4).

10. System according to any one of the preceding claims 8 to 9, **characterized in that** one or more mirrors and/or camera/monitor combinations are provided to allow the machine operator a visual monitoring of the proper contact of the trolleys (10) with the overhead line system (20).

11. System according to any one of the claims 8 to 10, **characterized in that** the edge of the projecting roof (4) provides a suitable elevated portion or sill in the region of the cutout to protect the current collector heads (12a, 12b) disposed thereunder from dropping bulk load or unit load.

12. System according to any one of the claims 8 to 11, **characterized in that** a control unit is provided that controls the raising, lowering, and centering of the current collector heads (12a, 12b) in an automated manner during the travel movement.

13. System according to any one of the claims 8 to 12, **characterized in that** the construction machine comprises a diesel-electric travel drive and the control unit is designed such that a switchover is made between diesel-electric and electric travel drive of the vehicle if the at least one trolley (10) is in contact with the overhead line system (20).

14. Use of a system in accordance with claim 1 for the supply of the at least one construction machine with electric energy on a mountain road.

## Revendications

1. Système comprenant un système de caténaire (20) pour l'alimentation électrique de l'entraînement d'un ou de plusieurs engins de chantier pour le transport de marchandises en vrac ou en morceaux, avec une caténaire qui comprend au moins une paire de lignes (21a, 21b) s'étendant parallèlement le long du trajet et conduisant le courant en sens inverse, et le système comprenant en outre un engin de chantier qui comprend des pantographes (10), les pantographes (10) étant en contact électrique avec les lignes (21a, 21b),
**caractérisé en ce que**
chaque ligne (21a, 21b) est équipée à son extrémité d'au moins un auxiliaire de guidage (22a, 22b) formant un canal d'amenée pour recevoir et guider la tête du pantographe (10), le canal d'amenée convergeant en direction de la ligne associée, et **en ce que** les deux pantographes (10) peuvent être déplacés activement au moyen d'entraînements indépendamment l'un de l'autre dans la direction verticale et horizontale.

2. Système selon la revendication 1, **caractérisé en ce que** la largeur de canal et/ou la hauteur de canal du canal d'amenée de l'auxiliaire de guidage (22a, 22b) est réduite en direction de la ligne (21a, 21b).

3. Système selon l'une quelconque des revendications 1 ou 2, **caractérisé en ce que** les auxiliaires de guidage (22a, 22b) d'une paire de lignes (21a, 21b) sont agencés l'un à côté de l'autre à la même hauteur, vu dans la direction de déplacement ; en option, la distance entre les axes centraux des deux auxiliaires de guidage (22a, 22b) pouvant être plus grande que la distance principale de la paire de caténaire (21a, 21b).

4. Système selon l'une quelconque des revendications 2 ou 3 précédentes, **caractérisé en ce que** la largeur de canal de chaque auxiliaire de guidage (22a, 22b) est définie par deux parois latérales opposées (23, 24), les parois latérales s'étendant de l'extérieur vers l'intérieur dans la direction de la ligne pour la réduction symétrique de la largeur de canal avec une inclinaison identique par rapport à l'axe central, ou seule la paroi latérale extérieure s'étendant de manière inclinée par rapport à l'axe central, tandis que la paroi latérale intérieure s'étend parallèlement à l'axe de la caténaire.

5. Système selon l'une quelconque des revendications précédentes, **caractérisé en ce que** les auxiliaires de guidage (22a, 22b) d'une paire de lignes (21a, 21b) sont agencés en décalage l'un par rapport à l'autre dans la direction de déplacement.

6. Système selon la revendication 5, **caractérisé en ce que** la distance entre les lignes parallèles (21a, 21b) est agrandie dans la zone d'au moins un auxiliaire de guidage (22a, 22b), notamment par un éloignement latéral de la section de ligne de la première ligne qui s'étend parallèlement à l'auxiliaire de guidage de la deuxième ligne et/ou **en ce que** la largeur du canal d'amenée d'au moins un auxiliaire de guidage est, au moins initialement, plus grande que la distance régulière entre les lignes parallèles (21a, 21b).

7. Système selon l'une quelconque des revendications précédentes, **caractérisé en ce qu'**il est prévu sur le plancher de déplacement, dans la zone d'au moins un auxiliaire de guidage (22a, 22b), un marquage visuel pour le conducteur de l'engin de chantier, afin de l'aider lors de l'introduction des têtes de pantographe (12a, 12b) dans l'auxiliaire de guidage correspondant (21a, 21b), notamment sous la forme d'une application graphique sur le plancher de déplacement et/ou d'une projection optique sur le plancher de déplacement et/ou au moyen d'un ou de plusieurs moyens lumineux pour réaliser une balise pour la navigation.

8. Système selon l'une quelconque des revendications précédentes, dans lequel l'engin de chantier est configuré notamment pour l'industrie minière ou l'exploitation des mines et est équipé d'un entraînement électrique.

9. Engin de chantier en liaison électrique avec un système de caténaire (20) selon la revendication 1, **caractérisé en ce que** les pantographes (10) prévoient une possibilité de réglage passif dans la direction horizontale et/ou verticale, un réglage passif n'ayant lieu qu'après un contact mécanique réussi des pantographes (10) avec la caténaire (21a, 21b) pendant le fonctionnement de la caténaire du véhicule, pour garantir une pression d'appui aussi constante que possible des pantographes (10) sur la caténaire et **en ce que**, de préférence, les pantographes (10) sont agencés à l'avant du véhicule et/ou décalés latéralement par rapport à une cabine de conducteur de l'engin de chantier, idéalement en dehors du champ de vision du conducteur de l'engin et **en ce que**, de préférence, un avant-toit (4) de l'engin de chantier, notamment dans le cas d'une réalisation de l'engin de chantier sous forme de tombereau, comprend un évidement correspondant pour permettre un abaissement des têtes de pantographe (12a, 12b) sur une surface de dépôt (3) située en dessous de l'avant-toit (4).

10. Système selon l'une quelconque des revendications 8 ou 9 précédentes, **caractérisé en ce qu'**un ou plusieurs miroirs et/ou combinaisons caméra/moniteur sont prévus pour permettre au conducteur de l'engin de contrôler visuellement le contact correct des pantographes (10) avec le système de caténaire (20).

11. Système selon l'une quelconque des revendications 8 à 10, **caractérisé en ce que** le bord de l'avant-toit (4) dans la zone de l'évidement prévoit une surélévation ou un seuil approprié pour protéger les têtes de pantographe (12a, 12b) situées en dessous contre la chute de matériaux en vrac ou en morceaux.

12. Système selon l'une quelconque des revendications 8 à 11, **caractérisé en ce qu'**il est prévu une unité de commande qui commande de manière automatisée le soulèvement, l'abaissement et le centrage des têtes de pantographe (12a, 12b) pendant le déplacement.

13. Système selon l'une quelconque des revendications 8 à 12, **caractérisé en ce que** l'engin de chantier comprend un entraînement diesel-électrique et l'unité de commande est conçue de manière à commuter entre l'entraînement diesel-électrique et l'entraînement électrique du véhicule si l'au moins un pantographe (10) est en contact avec le système de caténaire (20).

14. Utilisation d'un système selon la revendication 1 pour l'alimentation en énergie électrique d'au moins un engin de chantier sur une route de montagne.
